# EUROPÄISCHE PATENTSCHRIFT

(11) **EP 3 070 494 B1**
(45) Veröffentlichungstag und Bekanntmachung des Hinweises auf die Patenterteilung: **28.04.2021**
(21) Anmeldenummer: 15159580.8
(22) Anmeldetag: 18.03.2015
(51) Int. Cl.: G01S 17/10, G01S 17/36, G01S 17/87, G01S 7/481

(54) **ELEKTROOPTISCHES DISTANZMESSVERFAHREN UND EBENSOLCHER DISTANZMESSER**
ELECTRO-OPTICAL DISTANCE MEASURING METHOD AND ELECTRO-OPTICAL DISTANCE METER
PROCÉDÉ DE TÉLÉMÉTRIE ÉLECTRO-OPTIQUE ET TÉLÉMÈTRE ASSOCIÉ

(43) Veröffentlichungstag der Anmeldung: 21.09.2016
(73) Patentinhaber: Leica Geosystems AG, 9435 Heerbrugg (CH)
(72) Erfinder: Stutz, Reto, 9434 Au (CH)
(74) Vertreter: Kaminski Harmann

(56) Entgegenhaltungen:
- EP-A1- 2 637 038
- AT-B- 355 096
- DE-A1- 2 351 233
- DE-B3-102013 003 186
- US-A1- 2013 050 676

## Beschreibung

Die Erfindung betrifft ein elektrooptisches Distanzmessverfahren, welches wenigstens ein Aussenden eines Lichtsignals, insbesondere von Laserlicht, auf ein Zielobjekt, ein Detektieren eines vom Zielobjekt zurückkommenden Anteils des ausgesandten Lichtsignals mit einem Detektor und einer dem Detektor nachgeschalteten Signalverarbeitungselektronik und ein Bestimmen einer Distanz zum Zielobjekt mit einer Steuer- und Auswertekomponente umfasst. Die Erfindung betrifft auch einen zu dem erfindungsgemässen Distanzmessverfahren analogen elektrooptischen Distanzmesser.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel anhand der Laufzeit des Pulses bestimmt werden kann. Solche Pulslaufzeitmesser haben sich mittlerweile in vielen Bereichen als Standardlösungen durchgesetzt.

Zur Detektion des zurückgestreuten Pulses werden zumeist zwei unterschiedliche Ansätze verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Problematisch ist jedoch, dass bei schwachen rückgestreuten Pulsen, wie sie beispielsweise durch grössere Messdistanzen bedingt werden, eine Detektion nicht mehr möglich ist, wenn die Pulsintensität unter die Detektionsschwelle, d.h. unter den Schwellwert, fällt. Der wesentliche Nachteil dieser Schwellwertmethode liegt somit darin, dass die Amplitude des Messsignals hinreichend grösser als die Rauschamplitude von optischen und elektrischen Rauschquellen im Signalweg sein muss, um Fehldetektionen hinreichend zu minimieren, sodass für Messungen bei relativ grossen Distanzen die Schwellwertmethode nur bedingt einsatztauglich ist.

Der andere Ansatz basiert auf der Abtastung bzw. dem Sampling des rückgestreuten Pulses. Ein emittiertes Signal wird detektiert, indem die von einem Detektor erfasste Strahlung abgetastet, innerhalb des abgetasteten Bereichs ein Signal identifiziert und schliesslich dessen Lage zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei häufig die gesamte Wellenform des analogen Signals der von einem Detektor erfassten Strahlung abgetastet. Nach Identifikation der Codierung des zugehörigen Sendesignals (ASK, FSK, PSK, etc.) eines empfangenen Signals, wird aus einem definierten Verlaufspunkt des abgetasteten und digitalisierten Signals, beispielsweise den Wendepunkten, den Kurvenmaxima, oder integral mittels eines aus der Zeitinterpolation bekannten Optimum Filters, sehr genau eine Pulslaufzeit bestimmt.

Problematisch ist der limitierte lineare Aussteuerbereich der elektronischen Empfängerschaltung. Im Nahbereich kann das Signal den Empfänger sättigen, so dass die Codierung des Sendesignals nicht mehr richtig ermittelt oder die Laufzeit ungenügend genau bestimmt wird.

Ein prohibitiver Nachteil der Signalabtastung liegt also darin, dass im Zustand einer gesättigten Empfangselektronik durch zu starke empfangene Lichtintensitäten, insbesondere also im Fall kurzer Distanzen zum Zielobjekt, keine angemessen auswertbaren Informationen des Messsignals mehr zur Verfügung stehen, da dann ein tatsächlicher Signalverlauf aufgrund Detektorsättigung nicht mehr feststellbar ist.

In der WO 2008/009387 ist dabei nun für Pulslaufzeitmessungen (ToF, Time-of-Flight) beschrieben, dass alternativ - d.h. je nach dem welcher Signaldynamikbereich des Empfängers durch das zurückkommende Signal angesprochen wird - entweder die Schwellwertmethode (bei starkem zurückkommendem Signal) oder die Abtastmethode WFD (bei schwächerem zurückkommendem Signal) verwendet werden kann.

Aus der US 6,115,112 ist ein Messverfahren mittels Signalabtastung bekannt, bei dem eine ungefähre zeitliche Festlegung der Ankunftszeit des Pulses durch eine vorgängig durchgeführte Grobmessung erfolgt. Die eigentliche Distanzmessung erfolgt dann im Rahmen einer Feinmessung für einen weiteren Lichtpuls, dessen eingeschränkter möglicher Ankunftszeitraum effizient abgetastet wird. Damit erfolgt eine Aufteilung der Messung in eine Grobmessung und eine Feinmessung. Die Anwendung dieses Ansatzes verlangt notwendigerweise eine sequentielle Abfolge von Messungen, da erst durch die Schwellwertmessung ein Zeitfenster definiert wird, in dem die Samplingmessungen folgen. Somit erfolgt eine zeitlich separierte Abfolge von Grob- und Feinmessung auf unterschiedliche Pulse.

US 2013/050676 A1 zeigt ein Entfernungsmessverfahren bei dem Laserimpulssätze mit Signaturen verwendet werden, die es ermöglichen, zurückgegebene Impulse mit emittierten Impulsen zu korrelieren. Jeder Impulssatz umfasst mindestens einen Impuls und eine Signatur, die aus einem Satz möglicher Signaturen ausgewählt ist. Von mindestens einer Oberfläche reflektierte Impulssätze werden erfasst und für jeden Satz wird die Signatur erkannt und eine Flugzeit bestimmt.

Damit stellen sich als wesentliche Nachteile der oben beschriebenen bekannten Messprinzipien nach dem Pulslaufzeitprinzip entweder die Beschränkung der Signaldetektion durch eine Detektionsschwelle oder aber die Notwendigkeit der Festlegung eines zeitlichen Fensters (Grobdistanz) für die Abtastung dar.

Die Aufgabe der vorliegenden Erfindung besteht in der Bereitstellung eines Distanzmessverfahrens bzw. Distanzmessgeräts, womit die aus dem Stand der Technik bekannten Nachteile vermieden werden, insbesondere wobei schnelle und präzise Messungen sowohl für kurze als auch für lange Distanzen ermöglicht werden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein elektrooptisches Distanzmessverfahren, welches wenigstens ein Aussenden eines Lichtsignals, insbesondere von Laserlicht, auf ein Zielobjekt, ein Detektieren eines vom Zielobjekt zurückkommenden Anteils des Lichtsignals mit einem Detektor (und einer dem Detektor nachgeschalteten

Signalverarbeitungselektronik) und ein Bestimmen einer Distanz zum Zielobjekt (mit einer Steuer- und Auswertekomponente) umfasst.

Erfindungsgemäss umfasst das ausgesandte Lichtsignal eine Folge aus Folgenglieder von je mindestens einem Lichtpuls P(TOF) und einem Lichtsignalzug P(Φ), wobei die Lichtpulse P(TOF) jeweils eine höhere Intensitäts-Amplitude I aufweisen als die Lichtsignalzüge P(Φ).

Insbesondere folgt dabei auf das Aussenden eines Lichtpulses P(TOF) jeweils sofort direkt darauf das Aussenden eines Lichtsignalzugs P(Φ), d.h. im Wesentlichen ohne Verzögerung. Jeweils ein Lichtpuls P(TOF) und ein Lichtsignalzug P(Φ) sind somit jeweils sozusagen direkt hintereinander in der Luft auf dem Weg zum Ziel und zurück. Alternativ kann jedoch der jeweilige Lichtsignalzug P(Φ) z.B. auch so zeitlich ausgesendet (getimed) werden, dass er zeitlich in der Mitte zwischen jeweils zwei aufeinander folgend ausgesendeten Lichtpulsen P(TOF) liegt.

Die Lichtpulse P(TOF) sind nun dabei hinsichtlich ihrer Intensitäts-Amplitude I so konfiguriert, dass die von einem - für die jeweilige Anwendung des Entfernungsmessverfahrens in einem mittleren Entfernungsbereich befindlichen - Zielobjekt zurückkommenden Anteile bei Detektion durch den Detektor zur Ansteuerung des Detektors in seinem oberen Amplitudenbereich vorgesehen sind. Und die Lichtsignalzüge P(Φ) sind hinsichtlich ihrer Intensitäts-Amplitude I so konfiguriert, dass die von einem - für die jeweilige Anwendung des Entfernungsmessverfahrens in einem mittleren (und ggf. auch nahen) Entfernungsbereich befindlichen - Zielobjekt zurückkommenden Anteile bei Detektion durch den Detektor zur Ansteuerung des Detektors in seinem linearen Amplitudenbereich vorgesehen sind.

Diese Angabe bzgl. der gewählten Intensitäten für Lichtpulse und Lichtsignalzüge ist vorgesehen für ein Ziel mit für die jeweilige vorgesehene Anwendung durchschnittlichen Reflexionseigenschaften.

Je nach Anwendung gibt es also Situationen mit - im Verhältnis für diese Anwendung - starken zurückkommenden Signalen (z.B. kurze Distanzen und/oder hohe Rückreflexion am Ziel) und mit - im Verhältnis für diese Anwendung - vergleichsweise schwachen Signalen (z.B. lange Distanzen und/oder geringe Rückreflexion). Die zuvor gemachten Angaben beziehen sich dabei auf zurückkommende Signale im - im Verhältnis für die betreffende Anwendung - mittleren Intensitätsbereich (also auf mittelstarke/mittelschwache zurückkommende Signale für die jeweilige Anwendung). Die Intensitäten der Lichtpulse P(TOF) und der Lichtsignalzüge P(Φ) werden dann so gewählt, dass für - im betreffenden Anwendungsgebiet - mittelstarke/-schwache zurückkommende Signale die zurückkommenden Anteile der Lichtpulse P(TOF) den Detektor in seinem oberen Amplitudenbereich ansteuern und die zurückkommenden Anteile der Lichtsignalzüge P(Φ) den Detektor in seinem linearen/mittleren Amplitudenbereich ansteuern.

Dies ermöglicht etwa, dass abhängig vom Amplitudenbereich, in dem der Detektor durch die detektierten zurückkommenden Anteile der Folgenglieder jeweils angesteuert wird:
- nur der jeweils detektierte zurückkommende Anteil des Lichtpulses P(TOF) hinsichtlich einer zeitlichen Lage - sozusagen im Einzelschussverfahren - für die Entfernungsbestimmung herangezogen wird (bei - im Verhältnis für diese Anwendung - vergleichsweise schwachen Signalen, also z.B. lange Distanzen und/oder geringe Rückreflexion) oder
- nur der jeweils detektierte zurückkommende Anteil des Lichtsignalzugs P(Φ) für die Entfernungsbestimmung herangezogen wird (dann bei - im Verhältnis für diese Anwendung - vergleichsweise starken Signalen, also z.B. kürzeren Distanzen und/oder hoher Rückreflexion am Zielobjekt, wobei sich der Detektor hier durch die zurückkommenden Anteile des Lichtpulses in der oder zumindest nahe der Sättigung befindet).

Ferner kann auch der jeweils detektierte zurückkommende Anteil des Lichtpulses P(TOF) und der jeweils detektierte zurückkommende Anteil des Lichtsignalzugs P(Φ) gemeinsam für die Entfernungsbestimmung herangezogen werden, insbesondere wobei jeweils eine Information über die bestimmte zeitliche Lage des zurückkommenden Anteils des Lichtpulses P(TOF) im Rahmen des Auswertens des zurückkommenden Anteils des Lichtsignalzugs P(Φ) desselben Folgenglieds berücksichtigt wird.

Es kann also eine situationsbedingte Wahl (d.h. abhängig von der Stärke des zurückkommenden Signals) eingestellt sein, sodass je nach Stärke des zurückkommenden Signals entweder nur die zurückkommenden Lichtpulse oder alternativ nur die zurückkommenden Lichtsignalzüge ausgewertet werden. Oder es kann auch eine situationsbedingte Wahl eingestellt sein, wobei aus den drei Auswertungsvarianten anhängig von der Stärke des zurückkommenden Signals ausgewählt wird (-> nur zurückkommender Lichtpuls, nur zurückkommender Lichtsignalzug oder beides gemeinsam). Oder es können auch stets beide zurückkommende Signalanteile - soweit möglich - für die Auswertung herangezogen werden.

Anhand von dieser erfindungsgemässen Aussendung von - direkt aufeinander folgend - je einem TOF-Lichtpuls und einem Lichtsignalzug kann somit der gesamte Dynamikbereich abgedeckt werden, ohne dass Probemessungen (im Sinne von Vormessungen/Grobmessungen) auf das Ziel nötig sind. Es kann sofort die eigentliche Messung erfolgen und ohne Zeitverlust kann dann die auf die jeweilige Stärke des jeweils zurückkommenden Signals angepasste Auswertung (entweder des TOF-Lichtpulses oder des Lichtsignalzugs) erfolgen. Es kann erfindungsgemäss also eine Amplitudenaufteilung erfolgen, bei der die beiden Folgenmitglieder-Typen (leistungsstarkes TOF-Signal und Lichtsignalzug) praktisch ohne Lücke den - für die jeweilige Anwendung - gesamten erforderlichen Signaldynamikbereich abdecken.

Die Lichtpulse P(TOF) sind dabei jeweils so moduliert, dass deren vom Zielobjekt zurückkommende Anteile zum Ausgewertetwerden nach der Pulslaufzeitmethode TOF vorgesehen sind. Die Auswertung kann also - wie dies an sich bekannt ist - mittels einer digitalen Filtermethode zur Bestimmung der Laufzeit vorgesehen sein (z.B. entweder nach der Wellenformdigitalisierungsmethode WFD - mit zeitlicher Abtastung des zurückkommenden TOF-Pulses - oder auch mit einer digitalen Schwellwertmethode).

In einem Ausführungsbeispiel können die Lichtsignalzüge P(Φ) dabei z.B. jeweils eine Folge von vergleichsweise eng zeitlich beieinander liegenden, insbesondere quasi kontinuierlich ausgesandten, Lichtsignalzug-Lichtpulsen von jeweils geringer Amplitude im Vergleich zu den Lichtpulsen P(TOF) umfassen. Insbesondere können die einzelnen Lichtsignalzug-Lichtpulse P(Φ) z.B. mit einer Wiederholfrequenz von zwischen 10 MHz und 100 GHz ausgesandt werden, im Speziellen mit einer Wiederholfrequenz von zwischen 50 MHz und 1000 MHz.

Ferner können die Lichtsignalzug-Lichtpulse (wie dies an sich für die Aussendung von vielen Pulsen hintereinander an sich bereits bekannt ist) pro Lichtsignalzug P(Φ) jeweils empfängerseitig bzw. auswerteseitig akkumuliert werden um jeweils eine gemittelte Laufzeit für den gesamten jeweiligen Lichtsignalzug P(Φ) zu ermitteln.

Die Lichtsignalzüge P(Φ) können gemäss einem Ausführungsbeispiel jedoch auch jeweils eine Folge von nur zwischen zwei und fünfzig Lichtsignalzug-Lichtpulse umfassen (insbesondere selbst auch nochmals zwei Lichtsignalzug-Lichtpulse unterschiedlicher Amplitude). Im Extremfall ist dabei auch ein Lichtsignalzug, der nur aus einem Lichtsignalzug-Lichtpuls besteht, realisierbar.

Gemäss einem weiteren Aspekt der Erfindung können die detektierten zurückkommenden Anteile der Lichtpulse P(TOF) und Lichtsignalzüge P(Φ) durch die Signalverarbeitungselektronik jeweils abgetastet und digitalisiert werden und dabei digitale Daten erzeugt werden, die zur weiteren Auswertung, insbesondere durch ein FPGA, ein SoC oder einen Mikroprozessor, herangezogen werden. Insbesondere kann dabei im Rahmen des Detektierens das zurückkommende Lichtsignal gesamtheitlich fortlaufend zeitlich abgetastet und digitalisiert werden (insbesondere durch dieselbe Signalverarbeitungsschaltung mit Abtasteinheit), insbesondere mit einer Abtastrate von zwischen 50 MS und 20 GS, im Speziellen von zwischen 200 MS und 2 GS.

Gemäss einem weiteren Aspekt der Erfindung können die Laufzeit-Lichtpulse P(TOF) und die Lichtsignalzüge (P(Φ)) die gleiche oder aber unterschiedliche Träger-Wellenlängen haben.

Ferner können die Lichtpulse P(TOF) und die Lichtsignalzüge P(Φ) auch entweder von der gleichen Lichtquelle oder aber von unterschiedlichen Lichtquellen ausgesandt werden. Vorteilhaft können dabei etwa die Lichtpulse P(TOF) von einer Laserquelle und die Lichtsignalzüge P(Φ) von einer Superlumineszenzdiode SLD ausgesandt werden.

Gemäss einer Ausprägung der Erfindung können die Lichtsignalzüge P(Φ) jeweils auch so moduliert sein, dass deren vom Zielobjekt zurückkommenden Anteile zum Ausgewertetwerden nach der Phasenvergleichsmethode Φ vorgesehen sind. Die detektierten zurückkommenden Anteile der Lichtpulse P(TOF) werden dann hinsichtlich einer zeitlichen Lage und die detektierten zurückkommenden Anteile der Lichtsignalzüge P(Φ) hinsichtlich einer Phasenlage ausgewertet.

Dabei können die Lichtsignalzüge P(Φ) jeweils z.B. eine Zeitdauer von zwischen 40 und 95 % des Zeitabstands zwischen zwei aufeinander folgenden Lichtpulsen P(TOF) der Signal-Folge abdecken.

Der Zeitabstand Δ(TOF) zwischen zwei aufeinander folgenden Lichtpulsen P(TOF) kann ferner z.B. zwischen 50 ns und 2000 ns betragen.

Auch der Phasenvergleichs-Lichtsignalzug kann dabei nach der Wellenformdigitalisierungsmethode WFD erfasst und ausgewertet werden kann. Die Phasenbestimmung kann dabei z.B. mit einem hochauflösenden Feininterpolationsalgorithmus erfolgen.

Im Rahmen des Detektierens kann also gemäss den zuvor genannten Aspekten der Erfindung eine Signalabtastung zur Identifikation und Bestimmung einer zeitlichen Lage des zurückkommenden Anteils des TOF-Lichtpulses (also eine Abtastung und Auswertung des TOF-Pulses nach der Wellenformdigitalisierungsmethode WFD) sowie - parallel dazu - ein Auswerten des detektierten zurückkommenden Anteils des Phasenvergleichs-Lichtsignalzugs nach der Phasenvergleichsmethode Φ erfolgen.

Das Lichtsignal umfasst dann insgesamt also eine Folge von TOF-Lichtpulsen und Lichtsignalzügen, wobei diese jeweils zeitlich ineinander greifen, sodass abwechselnd und insbesondere zeitlich nacheinander jeweils ein Abtastungslichtpuls P(TOF) und ein Phasenvergleichs-Lichtsignalzug P(Φ) ausgesandt werden.

Die Phasenvergleichs-Lichtsignalzüge können auch durchgehend über die gesamte Mess- bzw. ggf. Scan-Dauer, also durchgehend während der Aussendung einer Vielzahl von TOF-Pulsen, ausgesandt werden, wobei dann für eine Auswertung beispielsweise die Signale der Signalfolgen (niederfrequente TOF-Pulse und hochfrequentes Phasenmessmethoden-Signal, insbesondere in Form von hochfrequenten Φ-Pulsen) in geeigneter Weise, beispielsweise mit einer entsprechenden relativen Normierung, voneinander subtrahiert oder zueinander addiert werden.

Das Verfahren beruht also in einer Ausprägung der Erfindung auf einer Kombination einer reinen Laufzeitmethode (TOF) mit einer Art Phasenvergleichsmethode. Dabei kann das Empfängerprinzip WFD (Wave-Form-Digitizing) für beide Signalmodulationen gemeinsam genutzt werden kann, wobei die Signalaufbereitung und -auswertung hingegen vorteilhaft unterschiedlich ausgelegt ist. Dabei wird ein Lichtsignal mit Komponenten von zweierlei Art auf ein Zielobjekt ausgesandt, einerseits TOF-Pulse relativ hoher Intensität entsprechend typischen für die Pulslaufzeitmethode (TOF-Methode) eingesetzten Pulsen, beispielsweise mit einer Intensität von 50 nJ und einer im Vergleich niedrigen Wiederholrate, beispielsweise 2 MHz entsprechend einem Zeitabstand von 500ns zwischen zwei aufeinander folgenden TOF-Laufzeitpulsen, und andererseits ein Lichtsignalzugs niedrigerer Intensität insbesondere in Form von Lichtsignalzug-Lichtpulsen, also einem Zug von Pulsen relativ niedriger Intensität und vergleichsweise hoher Frequenz, beispielsweise mit einer Intensität von 1 nJ und einer Frequenz von 120 MHz entsprechend einem Zeitabstand von 8.33 ns zwischen zwei einzelnen aufeinander folgenden Lichtsignalzug-Lichtpulsen. Die intensiven TOF-Pulse sind so gestaltet, dass sie mit Sicherheit, auch bei größeren Distanzen zum Zielobjekt (beispielsweise von mehr als 30 m) durch Signalverarbeitungs-Elektronikkomponenten für die Abtastmethode abtastbar und auswertbar sind. Insbesondere im Fall vergleichsweise kürzerer Distanzen, also beispielsweise von weniger als 30 m, ist es aber möglich, dass eingesetzte Detektoren für den Nachweis des vom Zielobjekt zurückgestreuten Lichts durch starke Lichtsignale gesättigt, d.h. übersteuert werden, so dass dann eine hochgenaue Bestimmung der Pulslaufzeit und damit der Entfernung zum Zielobjekt "nur" anhand der TOF-Methode nicht mehr hinreichend möglich ist, auch wenn dabei eine etwas gröbere Entfernungsbestimmung noch gewährleistet ist. Demgegenüber sind die schwächeren Lichtsignalzug-Lichtpulse so bemessen, dass ihre Rückreflex-Lichtsignale nicht zu einer Detektorsättigung führen und ihre Signale durch Komponenten der Signalverarbeitungselektronik z.B. für die Phasenvergleichsmethode verarbeitbar sind.

Erfindungsgemäss kann also im Nahbereich (etwa für Distanzen z.B. unter 25 oder 30m) - d.h. also im oberen Dynamikbereich oberhalb der Sättigungsgrenze beim zurückkommenden TOF-Puls - eine Auswertung des Signals (unter Auswertung jeweils der zurückkommenden Lichtsignalzüge) massgeblich z.B. unter Anwendung der Phasenvergleichsmethode oder der Akkumulationsmethode erfolgen, und im Fernbereich (also etwa z.B. für Distanzen über etwa 25 oder 30m) - d.h. also im unteren Dynamikbereich - vornehmlich eine Auswertung der TOF-Pulse z.B. nach der Wellenformdigitalisierungs- und Laufzeitbestimmungsmethode erfolgen. Die Genauigkeit bei der Distanzbestimmung wird also im Nahbereich massgeblich beeinflusst durch Anwendung der Phasenvergleichsmethode bzw. Akkumulationsmethode, und im Fernbereich durch Anwendung der TOF-Methode.

Die Stärken der beiden Methoden werden erfindungsgemäss somit vorteilhaft kombiniert und die Schwächen (TOF-Methode im Nahbereich, wegen Übersättigung; und Phasenvergleich/Akkumulation im Fernbereich, u.a. wegen schwachem Detektions-Signal) jeweils durch die andere Methode gestützt.

Ferner kann - als synergetischer Effekt - dabei ausgenutzt werden, dass die über die TOF-Methode gewonnene Entfernungsinformation (auch wenn diese im Nahbereich bei übersättigendem TOF-Puls vergleichsweise nicht so genau ist) für die Auswertung nach der Phasenvergleichsmethode mit einbezogen werden kann, insbesondere zur Auflösung von Ambiguitäten beim Phasenvergleich.

Die für die Phasenvergleichsmethode üblicherweise bestehende Ambiguitäten in einer Distanzmessung nach der Phasenvergleichsmethode/Akkumulationsmethode, sobald die Phasenverschiebung eine Wellenlänge überschritten hat (bzw. die kleinen Lichtsignalzug-Pulse der eindeutigen Zuordnung bedürfen), kann hier erfundungsgemäss gelöst werden, da die anhand der TOF-Auswertung des TOF-Pulses gewonnene Entfernungsinformation zum Ziel (auch wenn diese für im näheren Bereich liegende Ziele etwas ungenau sein mag) dazu herangezogen werden kann.

Auch können durch entsprechende Bemessung der TOF-Pulse Doppelziele, also Erfassung mehrerer Objekte durch den gleichen Puls, erkannt und entsprechend in der Datenauswertung berücksichtigt werden.

Eine Eindeutigkeit bei der Auswertung von mehreren ausgesandten Lichtsignalzügen kann z.B. dadurch gewährleistet, dass die jeweiligen Lichtsignalzüge mit unterschiedlichen Mustern moduliert werden, d.h. die Modulation des Phasenvergleichs-Lichtsignalzugs nach jeder Aussendung eines TOF-Pulses gewechselt wird.

Alternativ oder zusätzlich kann dies jedoch auch dadurch erfolgen, dass die Zeitabstände zwischen jeweils zwei ausgesendeten TOF-Pulsen als Folgenglieder bekannt variieren oder aber dass mit Doppel-TOF-Pulsen als jeweilige Folgenglieder gearbeitet wurde und dabei die kurze Dauer zwischen den Doppelpulsen variiert wird.

Die Wiederholrate des Aussendens der Folgengleider (also die Wiederholrate bei der Aussendung jeweils der TOF-Pulse und Lichtsignalzüge) kann so bemessen werden, dass in der Regel nie zwei TOF-Pulse auf dem Weg zwischen Lichtquelle und Detektor unterwegs sind. Wird mit einer Kodierung gearbeitet z.B. wie in den Absätzen zuvor erklärt (z.B. bekannte Variation der zeitl. Abstände der ausgesendeten TOF-Lichtpulse) genügt es, dass einfach nur nie zwei oder mehr TOF-Pulse (bzw. Lichtsignalzüge) derselben Kodierung auf dem Weg zwischen Lichtquelle und Detektor unterwegs sind.

Erfindungsgemäss kann also - wie zuvor bereits erwähnt - der Lichtsignalzug innerhalb eines Zuges auch z.B. eine Folge von vergleichsweise eng zeitlich beieinander liegenden, im Speziellen quasi kontinuierlich ausgesandten, Φ-Lichtpulsen von jeweils geringerer Amplitude umfassen. Es ist jedoch - wie ebenso bereits schon einmal erwähnt - ebenso möglich, im Rahmen des Lichtsignalzugs nur zwei bis fünf Pulse auszusenden (ggf. auch innerhalb eines Zugs nochmals jeweils mit unterschiedlicher Amplitude, sodass sich z.B. dann inkl. des energiereichen TOF-Pulses dann "gross - mittel - klein - noch kleiner" für die Amplituden der aufeinanderfolgend ausgesandten Pulse ergibt).

Insbesondere kann auch für jeweils eine einzelne Messwertbestimmung eine Wiederholung von einer Vielzahl, insbesondere von zwei oder mehr, Einzelmessungen erfolgen, und deren einzelne Signale können dann bei Messungen und Bestimmungen der zurückkommenden Anteile des energiestarken TOF-Pulses und/oder der Lichtsignalzüge zur Ermittelung des Einzelmesswerts gemittelt werden.

Insbesondere wird im Rahmen des Detektierens das zurückkommende Lichtsignal gesamtheitlich fortlaufend zeitlich abgetastet und digitalisiert, insbesondere mit einer Abtastrate von zwischen 50 MS/s und 20 GS/s (also Mega- bzw. Gigasamples pro Sekunde), im Speziellen von zwischen 200 MS/s und 2 GS/s. Das Auswerten des zurückkommenden Lichtsignalzugs z.B. nach der Phasenvergleichsmethode Φ oder Akkumulationsmethode wird insbesondere als eine Art digitaler Phasenmessung mittels direkt abgetasteter Signalform (WFD) bzw. WFD-Auswertung auf einen Pulszug (oder dem durch die Pulszugmittelung entstehenden Puls) ausgeführt (Direct Sampling).

Ein weiterer Gegenstand der Erfindung ist ein elektrooptischer Distanzmesser mit wenigstens einer Lichtquelle zum Aussenden wenigstens eines Lichtsignals, insbesondere von Laserlicht, auf ein Zielobjekt, einer Empfangsschaltung mit einem Empfänger zum Detektieren des vom Zielobjekt zurückgestreuten Lichtsignals, wobei der Empfänger insbesondere mindestens eine Abtasteinheit zum Abtasten des vom Zielobjekt zurückkommenden Lichtsignals umfasst, und mit einer Steuer- und Auswertekomponente zum Bestimmen einer Distanz zum Zielobjekt. Erfindungsgemäss ist eine Aussendesteuerung vorgesehen, die derart konfiguriert und programmiert ist, dass damit im Betrieb des Distanzmessers das Distanzmessverfahren nach einer der zuvor beschriebenen Ausführungen durchgeführt wird.

Insbesondere ist die Empfangsschaltung bereitgestellt mit Abtast- und Digitalisiereinheit zur Signalabtastung der jeweils detektierten zurückkommenden Anteile der Lichtpulse P(TOF) und der Lichtsignalzüge P(Φ) und Erzeugung von digitalen Daten, die dann zur weiteren Auswertung heranziehbar sind.

Gemäss eines möglichen Aspekts kann in der Empfangsschaltung eine und dieselbe Abtasteinheit bereitgestellt sein, um sowohl zurückkommende Anteile jeweils des TOF-Lichtpulses als auch jeweils des Lichtsignalzugs zu erfassen und abzutasten.

Gemäss unterschiedlicher Ausführungsformen des erfindungsgemässen Distanzmessers ist die Lichtquelle als einzelne Lichtquelle zur Aussendung von Lichtsignalen mit einer selben oder mit mehreren unterschiedlichen Wellenlängen ausgebildet.

Gemäss einer speziellen Ausgestaltung des erfindungsgemässen Distanzmessers können dabei zwei unterschiedlichen (Teil-)Lichtquellen vorgesehen sein, eine davon zur Aussendung der Lichtpulse P(TOF) und die andere zur Aussendung ist der Lichtsignalzüge P(Φ). Vorteilhaft können dabei etwa die Lichtpulse P(TOF) von einer Laserquelle und die Lichtsignalzüge P(Φ) von einer Superlumineszenzdiode SLD ausgesandt werden. Zudem kann z.B. einer der zwei Lichtquellen, insbesondere der Superlumineszenzdiode SLD, oder ggf. auch beiden Lichtquellen im optischen Lichtweg ein Lichtverstärker nachgeordnet sein, insbesondere ein Erbium-dotierter Faserverstärker EDFA oder MOPA (Master Oscillator Power Amplifier).

Die Erfindung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a: eine Prinzipdarstellung eines elektrooptischen Distanzmessers nach dem Stand der Technik,
- Fig. 1b: eine Prinzipdarstellung eines Laufzeitmessverfahrens nach dem Stand der Technik,
- Fig. 2a: eine Prinzipdarstellung eines Schwellwertverfahrens für zurückgestreute Lichtsignale nach dem Stand der Technik,
- Fig. 2b: eine Prinzipdarstellung der Schwellenproblematik des Schwellwertverfahrens,
- Fig. 3a: eine Prinzipdarstellung eines Abtastverfahrens für zurückgestreute Lichtsignale nach dem Stand der Technik,
- Fig. 3b: eine Prinzipdarstellung der Sättigungsproblematik des Abtastverfahrens,
- Fig. 4: eine Illustration des erfindungsgemässen Distanzmessverfahrens,
- Fig. 5: eine mögliche Ausführungsform eines erfindungsgemässen elektrooptischen Distanzmessers,
- Fig. 6: eine Illustration des Wegs der Verarbeitung des Eingangssignals von einem Detektor für das zurückkommende Licht,
- Fig. 7a: eine erfindungsgemässe Ausführungsform des Empfängers (und Referenzempfängers) für Erzeugung und Vorbereitung der empfangenen zurückkommenden Signale für die jeweils nachfolgende Signalverarbeitungselektronik, und
- Fig. 7b: eine Illustration möglicher Ausführungsformen sequentieller Zeitverläufe (Kodierungen) für die Pulsabfolge im Signalkanal für die TOF-Signale und im Signalkanal für die Lichtsignalzüge.

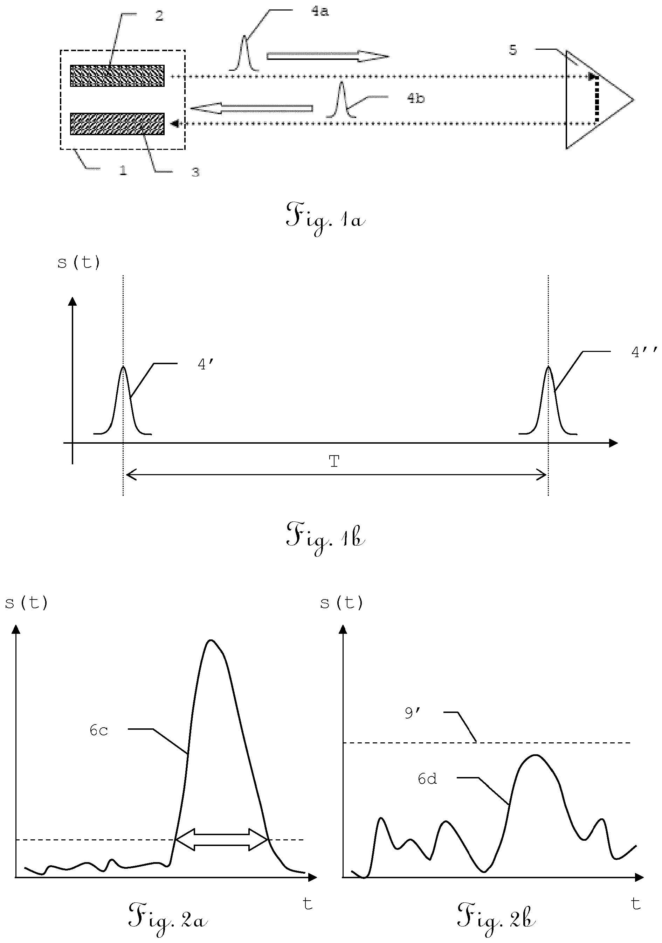

Fig. 1a zeigt eine Prinzipdarstellung eines elektrooptischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4a, der nach der Reflektion bzw. Rückstreuung an einem Ziel, z.B. einem Retroreflektor 5, wieder als zurückgestreuter Lichtpuls 4b vom Empfänger 3 detektiert wird. Anstelle der Lichtpulse kann erfindungsgemäss auch ein kontinuierlich moduliertes Sendesignal verwendet werden.

Wie in Fig. 1b in Prinzipdarstellung erläutert, wird die Entfernung aus der Laufzeit T als zeitliche Differenz zwischen dem Startzeitpunkt des Aussendens eines Lichtpulses 4' und dem Empfangszeitpunkt des zurückgestreuten Lichtpulses 4" ermittelt. Die Ermittlung des Empfangszeitpunktes erfolgt dabei durch die Auswertung eines Merkmals des Signalimpulses s(t), z.B. durch das Überschreiten einer Signalschwelle oder durch Schwerpunktbestimmung des integrierten Pulsverlaufs. Beim Schwellwertverfahren sind auch andere Methoden zur Messung der Laufzeit T nutzbar, wie beispielsweise die Umwandlung des Empfangssignals in ein bipolares Signal und anschliessende Bestimmung des Nulldurchgangs.

In Fig. 2a wird ein Schwellwertverfahren für zurückgestreute Lichtsignale 6c nach dem Stand der Technik erläutert. Um Rauschen, Hintergrundanteile oder systematische Störsignale wie beispielsweise durch das optische und elektrische Übersprechen zwischen Sendersignalweg und Empfängersignalweg zu unterdrücken und von einer Detektion auszuschliessen, wird eine Detektionsschwelle 9 verwendet. Unterhalb dieser Detektionsschwelle 9 liegende Signalintensitäten s(t) führen nicht zu einem Ansprechen der ein Stoppsignal generierenden Empfangseinheit als Diskriminator und somit nicht zu einer Detektion. Überschreitet das Signal 6c in seiner Intensität die Detektionsschwelle 9 erfolgen die Detektion und damit die Erzeugung des Stoppsignals und die Registrierung des Empfangszeitpunktes. Das von dem Schwellwertverfahren bereitgestellte Ausgangsignal ist somit abhängig vom Erreichen bzw. Überschreiten der Detektionschwelle 9 durch das empfangene bzw. Eingangssignal. Bleibt die Signalintensität s(t) jedoch wie im Beispiel der Fig. 2b dargestellt, stets unterhalb einer Detektionsschwelle 9', so kommt es zu keinem Ansprechen des Discriminators und das Signal 6d wird nicht detektiert. Diese Schwellenproblematik des Schwellwertverfahrens tritt beispielsweise bei grossen Messdistanzen oder entsprechenden Hintergrundeinflüssen auf, welche die nötige Schwellenhöhe des Schwellensignals nach oben treiben können.

Die reine Schwellwertmethode gewährt üblicherweise geringerer Distanzbestimmungs-Genauigkeiten als die im Folgenden erwähnte Abtastmethode (WFD-Prinzip).

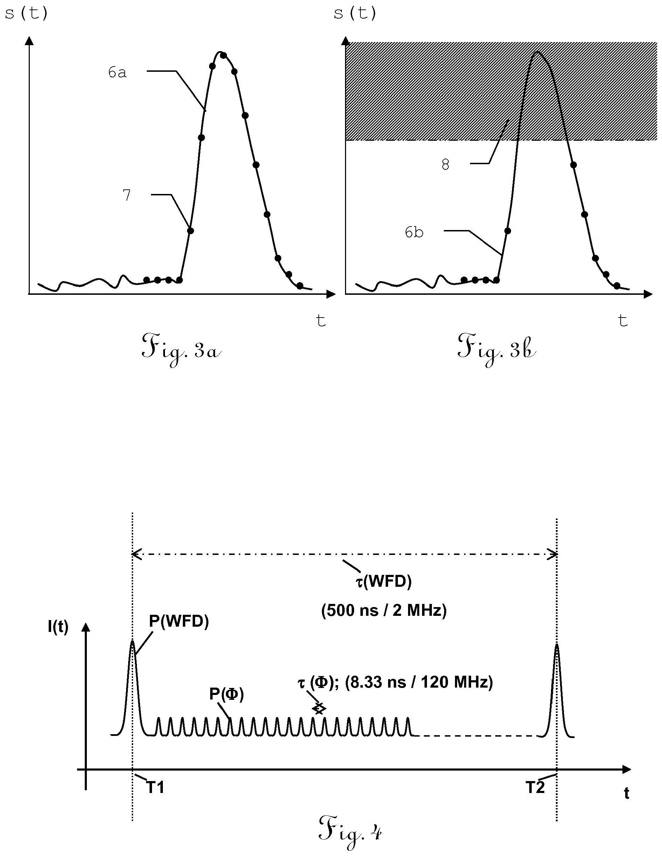

Fig. 3a veranschaulicht das Prinzip eines Abtastverfahrens (WFD) für zurückgestreute Lichtsignale nach dem Stand der Technik. Ein empfangenes Signal 6a bzw. dessen Signalverlauf wird zu verschiedenen Zeitpunkten 7 bzw. zugeordneten Zeitintervallen abgetastet, so dass sich die Signalform ableiten lässt. Um auch grosse Variationen des Signalimpulses s(t) detektieren zu können, ist empfängerseitig eine hohe Dynamik erforderlich, welche die vollständige Erfassung bzw. Abtastung des Signals 6a erlaubt. Anderenfalls kann die in Fig. 3b dargestellte Situation auftreten, wenn Teile des Signals 6b ausserhalb des Dynamikbereichs liegen und es zu einer Sättigungsproblematik des Abtastverfahrens kommt. Oberhalb einer Sättigungsgrenze existiert ein gesättigter Bereich 8 des Empfängers, in dem keine sinnvoll nutzbaren Abtastwerte des Pulses zur Verfügung stehen. Die Abtastung des Signals 6b wird dann auf den unterhalb der Sättigungsgrenze liegenden Bereich beschränkt. Insbesondere bei einer hohen Flankensteilheit ist eine Bestimmung des Signalform und Lage dann schwierig.

Fig. 4 zeigt eine Illustration des erfindungsgemässen Distanzmessverfahrens. Es beruht in einer Ausprägung auf einer Kombination der TOF-Methode (Schwellwert oder WFD) mit einer Phasenvergleichsmethode (Φ.Dabei werden Lichtsignale zweierlei Art auf ein Zielobjekt ausgesandt, einerseits Pulse relativ hoher Intensität entsprechend typischen für die Abtastmethode eingesetzten Pulsen, beispielsweise mit einer Intensität von 50 nJ und einer im Vergleich niedrigen Wiederholrate, beispielsweise 2 MHz entsprechend einem Zeitabstand τ(TOF) von 500ns zwischen zwei zu Zeitpunkten T1 und T2 aufeinander folgenden Pulsen P(TOF), welche nachfolgend auch als "TOF-Pulse" bezeichnet werden, und andererseits Pulse relativ niedriger Intensität und vergleichsweise hoher Frequenz, beispielsweise mit einer Intensität von 1 nJ und einer Frequenz von 120 MHz entsprechend einem Zeitabstand τ(Φ) von 8.33 ns zwischen zwei aufeinander folgenden Pulsen P(Φ), wie es für einen Einsatz im Phasenvergleichsverfahren/Puls-Akkumulationsverfahren üblich ist. Diese Pulse eines solchen Lichtsignalzugs werden nachfolgend auch "Φ-Pulse" genannt. Die intensiven TOF-Pulse sind so gestaltet, dass sie mit Sicherheit, auch bei größeren Distanzen zum Zielobjekt, beispielsweise von mehr als 30 m, durch Signalverarbeitungs-Elektronikkomponenten für die Impulsmethode abtastbar und auswertbar sind. Insbesondere im Fall kurzer Distanzen, also beispielsweise von weniger als 30 m, ist es aber möglich, dass eingesetzte Detektoren für den Nachweis des vom Zielobjekt zurückgestreuten Lichts durch starke Lichtsignale gesättigt, d.h. übersteuert werden, so dass dann eine hochgenaue Bestimmung der Pulslaufzeit und damit der Entfernung zum Zielobjekt nicht mehr möglich ist, auch wenn dabei eine etwas gröbere Entfernungsbestimmung noch gewährleistet ist (siehe dazu nochmals den in Figur 3b illustrierten Fall). Demgegenüber sind die schwächeren Φ-Pulse so bemessen, dass ihre Rückreflex-Lichtsignale nicht zu einer Detektorsättigung führen und ihre Signale durch Komponenten der Signalverarbeitungselektronik für die verarbeitbar sind.

Für die erfindungsgemässe Messpuls-Kombination wird für die TOF-Pulse jeweils die Pulslaufzeit gemessen, wobei das analoge Signal des gesamten Pulsverlaufs gemessen wird und dabei die Laufzeit für einen charakteristischen Punkt im Zeitverlauf, beispielsweise den Scheitelwert, genommen wird. Demgegenüber werden die Φ-Pulse vornehmlich nicht einzeln ausgewertet, sondern es werden lediglich die Phasen der Pulse des ausgesandten Pulszuges mit den Phasen der zurückgestreuten oder -reflektierten Pulse untereinander verglichen.

Die für die Art Φ-Methode (also Phasenvergleichsmethode/Kleinpuls-Akkumulationsmethode (auch als Kleinpuls-Aufsummier-und-Mittelungsmethode zu bezeichnen)) üblicherweise bestehende Unsicherheit in einer Distanzmessung, sobald die Phasenverschiebung eine Einzelpulslänge, also entsprechend 2n, überschritten hat, ist hier nicht gegeben, da - zumindest bei einer entsprechenden Wahl des Verhältnisses von Pulsdauer bzw. Pulsfrequenz von TOP-Pulsen und Φ-Pulsen zueinander - verhindert werden kann, dass die Phasenverschiebung von 2n überschritten wird, so dass Eindeutigkeit für eine darauf beruhende Distanzbestimmung gewährleistet ist. Auch können durch entsprechende Bemessung der TOF-Pulse Doppelziele, also Erfassung mehrerer Objekte durch den gleichen Puls, erkannt und entsprechend in der Datenauswertung berücksichtigt werden.

Die Eindeutigkeit ist insbesondere dadurch gewährleistet, dass die TOF-Pulse und die Φ-Pulse unterschiedlich moduliert werden und demzufolge die Modulation nach jeder Aussendung eines TOF-Pulses gewechselt wird.

Im vorliegenden Fall werden beispielsweise während des Zeitraums (500 ns) zwischen T1 und T2 zwischen zwei aufeinander folgenden TOF-Pulsen 60 energieärmere Φ-Einzelpulse als Lichtsignalzug ausgesandt. Die Lichtpulszüge können im Extremen 100 % des Zeitraums zwischen zwei aufeinander folgenden TOF-Pulsen abdecken. Jedoch sind auch Zeitabdeckungen zwischen beispielsweise 10 % und 95 % möglich, im Speziellen von 40 % oder 75 %. Die Φ-Pulse können auch durchgehend über die gesamte Messdauer, also durchgehend während der Aussendung einer Vielzahl von TOF-Pulsen, ausgesandt werden, wobei dann für eine Auswertung beispielsweise die Signale der verschiedenen Pulszüge (niederfrequente TOF-Pulse und hochfrequente Φ-Pulse) in geeigneter Weise, beispielsweise mit einer entsprechenden relativen Normierung, voneinander subtrahiert oder zueinander addiert werden.

Alternativ können jedoch auch Lichtpulszüge aus jeweils nur 2 bis 20 einzelnen energieärmeren Φ-Pulsen ausgesandt werden (ggf. sogar mit untereinander jeweils unterschiedlichen Intensitätsamplituden, wie oben schon erwähnt).

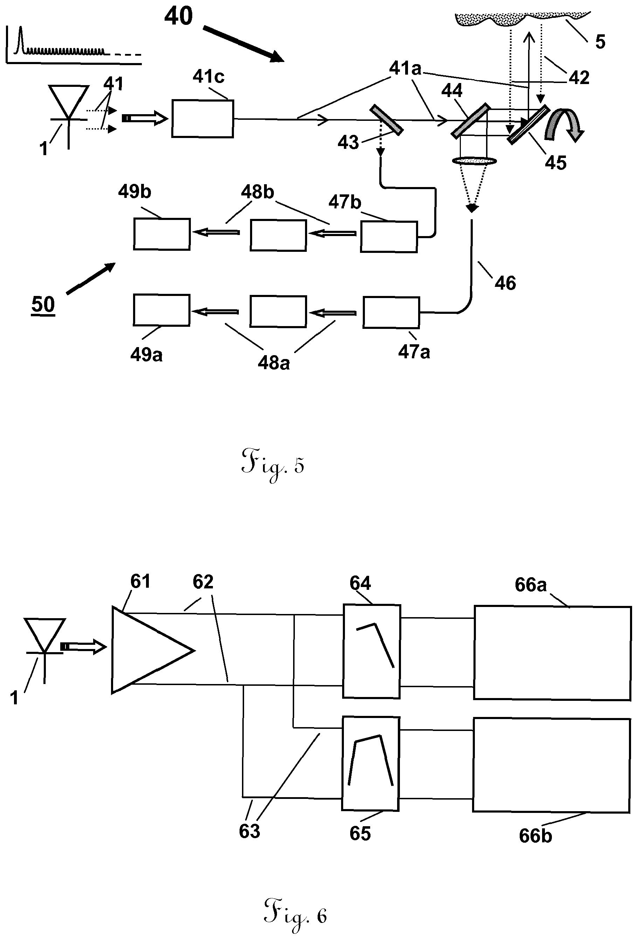

Fig. 5 zeigt eine mögliche Ausführungsform eines erfindungsgemässen elektrooptischen Distanzmessers 40. Moduliertes Anregungslicht 41, das von einer einzelnen Lichtquelle 1, beispielsweise einem Laser oder einer Laserdiode, oder von mehreren Lasern / Laserdioden stammen kann, wird vorzugsweise über einen Lichtverstärker 41c, insbesondere einen Erbium-dotierten Faserverstärker (EDFA) in einem Anregungsstrahlengang 41a ausgesandt. Ein, beispielsweise unter 45° zur Lichtausbreitungsrichtung angebrachter, Strahlteiler 43 lässt den grössten Teil des Anregungslichts, beispielsweise 99 %, passieren und spiegelt einen geringen Anteil, beispielsweise 1 %, für Referenzmessung und Festsetzung eines Startsignals für die Empfangsschaltung 50 zur Erfassung und Verarbeitung von Licht, welches von einem Zielobjekt 5 zurückgestreut oder zurückreflektiert wird, aus. Im Anregungsstrahlengang nachfolgend auf diesen Strahlteiler passiert das Anregungslicht einen halbdurchlässigen Spiegel ("Einwegspiegel") 44, der für das Anregungslicht im Wesentlichen transparent, aber für vom Zielobjekt zurückkommendes Licht reflektierend ist. Dann trifft das Anregungslicht auf einen rotierenden Spiegel 45, von dem es zum Scannen des Zielobjekts 5 umgelenkt wird.

Das vom Zielobjekt 5 zurückkommende Licht wird über den rotierenden Spiegel 45 zu dem halbdurchlässigen Spiegel 44 umgelenkt, wo es in Richtung Empfangsstrahlengang 46 / Empfangsschaltung 50 gespiegelt wird, an dessen Anfang es auf einen Detektor 47a, beispielsweise eine Avalanche-Photodiode (APD), trifft. Danach wird das Empfangssignal in einem angedeuteten Mess-Signalpfad 48a einem Wellenform-Digitilisator ("WFD", Wave-Form-Digitizer) 49a zugeführt.

Der geringe an dem Strahlteiler 43 ausgespiegelte Anteil des Anregungslichts 41 wird über einen weiteren Detektor 47b, beispielsweise eine Pin-Diode, erfasst, und in einem angedeuteten Referenz-Signalpfad 48b einem als eine einfache Basisversion ausgeführten WFD 49b zugeführt. Es ist darauf hinzuweisen, dass nachfolgend auf die beiden Detektoren 47a 47b (APD und Pin-Diode) eine Weiterleitung von Mess- und Referenzsignal nicht notwendigerweise zu getrennten Signalverarbeitungskomponenten erfolgen muss, sondern auch mittels einer für die Verarbeitung beider Signale geeigneten gemeinsamen Empfangselektronik durchgeführt werden kann. Es sei jedoch bemerkt, dass - wie dies dem Fachmann an sich bekannt ist - auch ohne dediziertem Referenzpfad gearbeitet werden kann und z.B. nur über ein bekannt entferntes Ziel (z.B. bei einem Laserscanner die Stütze, die bei jedem Durchgang des rotierenden Spiegels über einen kleinen Drehwinkelbereich getroffen wird) kalibriert werden kann. Das Start-Zeichen als Referenz für die Zeitmessung kann jedoch auch rein elektrisch gegeben werden (d.h. abhängig von der Ansteuerung der den Lichtpuls aussendenden Lichtquelle).

Fig. 6 illustriert den Weg der Verarbeitung des Eingangssignals von einem Detektor 61 für das zurückkommende Licht. Das Signal wird von einem Verstärker (nicht gezeigt) verstärkt und dann in zwei Signalwege 62 und 63 aufgespalten: Ein Teil wird über einen Kurzpass-Filter 64 ("Low Pass") einem Analog-Digital-Wandler 66a als Teil der WFD-Elektronik ("WFD ADC") zur Auswertung der TOF-Signale zugeführt, der andere Signalanteil wird mit einem Hochpass-Filter 65 ("High Pass") gefiltert und einem Analog-Digital-Wandler 66b als Teil der Signalverarbeitungselektronik zur Auswertung der höherfrequenten Lichtsignalzüge zugeführt. Es sei jedoch darauf hingewiesen, dass die Lichtsignalzüge und die TOF-Signalpulse ebenso auch durch ein und dieselbe Elektronik ausgewertet werden können.

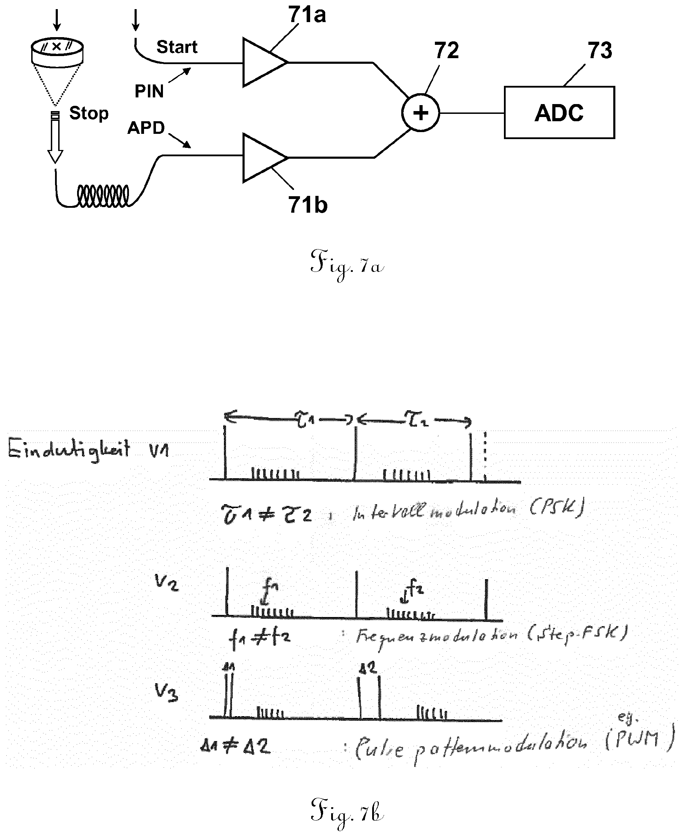

Fig. 7a zeigt eine erfindungsgemässe Ausführungsform des Empfängers/der Empfangsschaltung für Erzeugung und Vorbereitung der empfangenen zurückkommenden Signale (die empfangenen zurückkommenden Signale der TOF-Pulse und Lichtsignalzüge) für die jeweils nachfolgende Signalverarbeitungselektronik. Vorzugsweise mit Hilfe einer Faser werden die über die Empfangsoptik erfassten Lichtsignale zu einem Detektor geführt, insbesondere einer Avalanche-Photodiode (APD). Zur Erzeugung eines StartSignals können jeweilige Referenzsignale der ausgesandten Lichtsignale einer PIN-Diode zugeführt werden. Die Ausgangssignale von APD und Pin-Photodiode werden jeweils mittels Transimpedanz-Verstärkern (TIA) 71a, 71b verstärkt und dann bei einer Verarbeitungskomponente 72 ("+") zusammengeführt bzw. addiert, um dann gemeinsam einem Analog-Digital-Wandler 73 zugeführt zu werden.

Figur 7b illustriert mögliche Beispiele für ein Kodieren der ausgesendeten Signale zur Herstellung der Eindeutigkeit für die Auswertung. Dies kann z.B. dadurch gewährleistet werden, dass die jeweiligen Lichtsignalzüge mit unterschiedlichen Mustern moduliert werden, d.h. die Modulation jeweils des Lichtsignalzugs nach jeder Aussendung eines TOF-Pulses gewechselt wird (siehe Beispiel 2 aus Figur 7b).

Alternativ oder zusätzlich kann dies jedoch auch dadurch erfolgen, dass die Zeitabstände zwischen jeweils zwei ausgesendeten TOF-Pulsen als Folgenglieder bekannt variieren (d.h. "interval modulation", siehe Beispiel 1 aus Figur 7b) oder aber dass mit Doppel-TOF-Pulsen als jeweilige Folgenglieder gearbeitet wurde und dabei die (kurze) Dauer (der Zeitabstand) zwischen den Doppelpulsen variiert wird (siehe Beispiel 3 aus Figur 7b).

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Elektrooptisches Distanzmessverfahren mit wenigstens einem
• Aussenden eines Lichtsignals (41), insbesondere von Laserlicht, von mindestens einer Lichtquelle (1) auf ein Zielobjekt (5),
• Detektieren eines vom Zielobjekt (5) zurückkommenden Anteils (42) des Lichtsignals mit einem Detektor (47a, 47b, 51, 61) und einer dem Detektor nachgeschalteten Signalverarbeitungselektronik,
• Bestimmen einer Distanz zum Zielobjekt (5), wobei das ausgesandte Lichtsignal (41) eine Folge aus Folgengliedern von je
• mindestens einem Lichtpuls (P(TOF)) und
• einem Lichtsignalzug (P(Φ)) umfasst,
**dadurch gekennzeichnet, dass** die Lichtpulse (P(TOF)) jeweils eine höhere Intensitäts-Amplitude I ausweisen als die Lichtsignalzüge (P(Φ)), wobei
• die Lichtpulse (P(TOF)) jeweils so moduliert sind, dass deren vom Zielobjekt (5) zurückkommende Anteile zum Auswerten nach der Pulslaufzeitmethode TOF vorgesehen sind, und
• die Lichtsignalzüge (P(Φ)) jeweils so moduliert sind, dass deren vom Zielobjekt (5) zurückkommenden Anteile zum Auswerten nach der Phasenvergleichsmethode Φ vorgesehen sind,
sowie dass jeweils die detektierten zurückkommenden Anteile der Lichtpulse (P(TOF)) hinsichtlich einer zeitlichen Lage und die detektierten zurückkommenden Anteile der Lichtsignalzüge (P(Φ)) hinsichtlich einer Phasenlage ausgewertet werden.

2. Distanzmessverfahren nach einem der vorangehenden Ansprüche,
wobei
• die Lichtpulse (P(TOF)) hinsichtlich ihrer Intensitäts-Amplitude I so konfiguriert sind, dass die von einem - in einem mittleren Entfernungsbereich befindlichen - Zielobjekt (5) zurückkommenden Anteile bei Detektion durch den Detektor zur Ansteuerung des Detektors in seinem oberen Amplitudenbereich vorgesehen sind, und
• die Lichtsignalzüge (P(Φ)) hinsichtlich ihrer Intensitäts-Amplitude I so konfiguriert sind, dass die von einem - in einem mittleren Entfernungsbereich befindlichen - Zielobjekt (5) zurückkommenden Anteile bei Detektion durch den Detektor zur Ansteuerung des Detektors in seinem linearen Amplitudenbereich vorgesehen sind.

3. Distanzmessverfahren nach einem der vorangehenden Ansprüche, wobei die Lichtsignalzüge (P(Φ)) jeweils eine Folge von vergleichsweise eng zeitlich beieinander liegenden, insbesondere quasi kontinuierlich ausgesandten, Lichtsignalzug-Lichtpulsen von jeweils geringer Amplitude im Vergleich zu den Lichtpulsen (P(TOF)) umfassen,
insbesondere wobei die einzelnen Lichtsignalzug-Lichtpulse (P(Φ)) mit einer Wiederholfrequenz von zwischen 10 MHz und 100 GHz ausgesandt werden, im Speziellen mit einer Wiederholfrequenz von zwischen 50 MHz und 1000 MHz.

4. Distanzmessverfahren nach Anspruch 3,
wobei die Lichtsignalzug-Lichtpulse pro Lichtsignalzug (P(Φ)) jeweils empfängerseitig bzw. auswerteseitig akkumuliert werden um jeweils eine gemittelte Laufzeit für den jeweiligen Lichtsignalzug (P(Φ)) zu ermitteln.

5. Distanzmessverfahren nach Anspruch 3 oder 4, wobei die Lichtsignalzüge (P(Φ)) jeweils eine Folge von zwischen zwei und fünfzig Lichtsignalzug-Lichtpulsen umfassen.

6. Distanzmessverfahren nach Anspruch 5, wobei die Folge zwei Lichtsignalzug-Lichtpulse unterschiedlicher Amplitude umfasst.

7. Distanzmessverfahren nach einem der Ansprüche 1 bis 4, wobei die Lichtsignalzüge (P(Φ)) jeweils eine Zeitdauer von zwischen 10 und 95 % des Zeitabstands zwischen zwei aufeinander folgenden Lichtpulsen (P(TOF)) abdecken.

8. Distanzmessverfahren nach einem der vorangehenden Ansprüche, wobei der Zeitabstand (Δ(TOF)) zwischen zwei aufeinander folgenden Lichtpulsen (P(TOF)) zwischen 50 ns und 2000 ns beträgt.

9. Distanzmessverfahren nach dem direkt vorangehenden Anspruch, wobei abhängig vom Amplitudenbereich, in dem der Detektor durch die detektierten zurückkommenden Anteile der Folgenglieder jeweils angesteuert wird,
• nur der jeweils detektierte zurückkommende Anteil des Lichtpulses (P(TOF)) hinsichtlich einer zeitlichen Lage - sozusagen im Einzelschussverfahren - für die Entfernungsbestimmung herangezogen wird oder
• nur der jeweils detektierte zurückkommende Anteil des Lichtsignalzugs (P(Φ)) für die Entfernungsbestimmung herangezogen wird oder
• der jeweils detektierte zurückkommende Anteil des Lichtpulses (P(TOF)) und der jeweils detektierte zurückkommende Anteil des Lichtsignalzugs (P(Φ)) gemeinsam für die Entfernungsbestimmung herangezogen werden, insbesondere wobei jeweils eine Information über die bestimmte zeitliche Lage des zurückkommenden Anteils des Lichtpulses (P(TOF)) im Rahmen des Auswertens des zurückkommenden Anteils des Lichtsignalzugs (P(Φ)) desselben Folgenglieds berücksichtigt wird;
im Speziellen wobei abhängig vom Amplitudenbereich, in dem der Detektor durch die detektierten zurückkommenden Anteile der Folgenglieder jeweils angesteuert wird, stets entweder
• nur der jeweils detektierte zurückkommende Anteil des Lichtpulses (P(TOF)) hinsichtlich einer zeitlichen Lage - sozusagen im Einzelschussverfahren - für die Entfernungsbestimmung herangezogen wird oder
• nur der jeweils detektierte zurückkommende Anteil des Lichtsignalzugs (P(Φ)) für die Entfernungsbestimmung herangezogen wird.

10. Distanzmessverfahren nach einem der vorangehenden Ansprüche, wobei die detektierten zurückkommenden Anteile der Lichtpulse (P(TOF)) und Lichtsignalzüge (P(Φ)) durch die Signalverarbeitungselektronik jeweils abgetastet und digitalisiert werden und dabei digitale Daten erzeugt werden, die zur weiteren Auswertung, insbesondere durch ein FPGA, ein SoC oder einen Mikroprozessor, herangezogen werden,
insbesondere wobei im Rahmen des Detektierens das zurückkommende Lichtsignal (42) gesamtheitlich fortlaufend zeitlich abgetastet und digitalisiert wird, insbesondere mit einer Abtastrate von zwischen 50 MS/s und 20 GS/s (also Mega- bzw. Gigasamples pro Sekunde), im Speziellen von zwischen 200 MS/s und 2 GS/s.

11. Distanzmessverfahren nach einem der vorangehenden Ansprüche, wobei die Lichtpulse (P(TOF)) und Lichtsignalzüge (P(Φ)) die gleiche oder aber unterschiedliche Träger-Wellenlängen haben.

12. Distanzmessverfahren nach einem der vorangehenden Ansprüche, wobei die Lichtpulse (P(TOF)) und die Lichtsignalzüge (P(Φ)) von der gleichen Lichtquelle oder aber von unterschiedlichen Lichtquellen, insbesondere die Lichtpulse (P(TOF)) von einer Laserquelle und die Lichtsignalzüge (P(Φ)) von einer Superlumineszenzdiode SLD, ausgesandt werden.

13. Elektrooptischer Distanzmesser (40) mit
• mindestens einer Lichtquelle (1) zum Aussenden wenigstens eines Lichtsignals (41), insbesondere von Laserlicht, auf ein Zielobjekt (5),
• einer Empfangsschaltung (50) mit einem Detektor (61) zum Detektieren des vom Zielobjekt zurückgestreuten Lichtsignals (42) und einer dem Detektor nachgeschalteten Signalverarbeitungselektronik,
• einer Auswertekomponente zum Bestimmen einer Distanz zum Zielobjekt (5),
wobei eine Steuerung vorgesehen ist, die derart konfiguriert und programmiert ist, dass damit im Betrieb das Distanzmessverfahren nach einem der Ansprüche 1 bis 12 durchgeführt wird.

14. Distanzmesser (40) nach Anspruch 13, wobei die Empfangsschaltung (50) bereitgestellt ist mit Abtast- und Digitalisiereinheit zur Signalabtastung der jeweils detektierten zurückkommenden Anteile der Lichtpulse (P(TOF)) und der Lichtsignalzüge (P(Φ)) und Erzeugung von digitalen Daten, die dann zur weiteren Auswertung heranziehbar sind.

15. Distanzmesser nach Anspruch 13 oder 14,
wobei zwei Lichtquellen vorhanden sind, davon eine Laserquelle zur Aussendung der Lichtpulse (P(TOF)) und eine Superlumineszenzdiode SLD zur Aussendung der Lichtsignalzüge (P(Φ)), insbesondere wobei mindestens einer der zwei Lichtquellen, insbesondere der Superlumineszenzdiode SLD, im optischen Lichtweg ein Lichtverstärker (41c), insbesondere ein Erbium-dotierter Faserverstärker EDFA, nachgeordnet ist.

## Claims

1. Electro-optical distance measurement method having at least one
• emission of a light signal (41), in particular of laser light, from at least one light source (1) onto a target object (5),
• detection of a fraction (42) of the light signal returning from the target object (5) using a detector (47a, 47b, 51, 61) and a signal processing electronics system connected downstream from the detector,
• determination of a distance to the target object (5), wherein
the emitted light signal (41) comprises a sequence of sequential elements of, in each case,
• at least one light pulse (P(TOF)) and
• one light signal train (P(Φ)),
**characterized in that**
the light pulses (P(TOF)) each have a higher intensity amplitude I than the light signal trains (P(Φ)), wherein
• the light pulses (P(TOF)) are each modulated so that the fractions thereof returning from the target object (5) are provided for analysis according to the pulse runtime method TOF, and
• the light signal trains (P(Φ)) are each modulated so that the fractions thereof returning from the target object (5) are provided for analysis according to the phase comparison method Φ,
so that in each case the detected returning fractions of the light pulses (P(TOF)) are analyzed with respect to a chronological location and the detected returning fractions of the light signal trains (P(Φ)) are analyzed with respect to a phase location.

2. Distance measurement method according to any one of the preceding claims, wherein
• the light pulses (P(TOF)) are configured with respect to the intensity amplitude I thereof so that the fractions returning from a target object (5) - located in a moderate distance range - are provided for activating the detector in its upper amplitude range upon detection by the detector, and
• the light signal trains (P(Φ)) are configured with respect to the intensity amplitude I thereof so that the fractions returning from a target object (5) - located in a moderate distance range - are provided for activating the detector in its linear amplitude range upon detection by the detector.

3. Distance measurement method according to any one of the preceding claims, wherein
the light signal trains (P(Φ)) each comprise a sequence of light signal train light pulses, which lie comparatively close to one another with respect to time and are in particular emitted quasi-continuously, each of lower amplitude in comparison to the light pulses (P(TOF)),
in particular wherein the individual light signal train light pulses (P(Φ)) are emitted at a repetition frequency of between 10 MHz and 100 GHz, especially at a repetition frequency of between 50 MHz and 1000 MHz.

4. Distance measurement method according to Claim 3,
wherein
the light signal train light pulses per light signal train (P(Φ)) are each accumulated on the receiver side or analysis side to ascertain an average runtime for the respective light signal train (P(Φ)) in each case.

5. Distance measurement method according to Claim 3 or 4,
wherein
the light signal trains (P(Φ)) each comprise a sequence of between 2 and 50 light signal train light pulses.

6. Distance measurement method according to Claim 5,
wherein
the sequence comprises two light signal train light pulses of different amplitudes.

7. Distance measurement method according to any one of Claims 1 to 4, wherein
the light signal trains (P(Φ)) each cover a duration of between 10 and 95% of the time interval between two successive light pulses (P(TOF)).

8. Distance measurement method according to any one of the preceding claims, wherein
the time interval (Δ(TOF)) between two successive light pulses (P(TOF)) is between 50 ns and 2000 ns.

9. Distance measurement method according to the directly preceding claim, wherein
depending on the amplitude range, in which the detector is activated in each case by the detected returning fractions of the sequential elements,
• only the respective detected returning fraction of the light pulse (P(TOF)) is used with respect to a chronological location - more or less in the single shot method - for the distance determination or
• only the respective detected returning fraction of the light signal train (P(Φ)) is used for the distance determination or
• the respective detected returning fraction of the light pulse (P(TOF)) and the respective detected returning fraction of the light signal train (P(Φ)) are jointly used for the distance determination, in particular wherein in each case an item of information about the determined chronological location of the returning fraction of the light pulse (P(TOF)) is taken into consideration in the scope of the analysis of the returning fraction of the light signal train (P(Φ)) of the same sequential element;
especially wherein, depending on the amplitude range, in which the detector is activated in each case by the detected returning fractions of the sequential elements, always either
• only the respective detected returning fraction of the light pulse (P(TOF)) is used with respect to a chronological location - more or less in the single shot method - for the distance determination or
• only the respective detected returning fraction of the light signal train (P(Φ)) is used for the distance determination.

10. Distance measurement method according to any one of the preceding claims, wherein
the detected returning fractions of the light pulses (P(TOF)) and light signal trains (P(Φ)) are each sampled and digitized by the signal processing electronics system and digital data are generated in this case, which are used for the further analysis, in particular by an FPGA, an SoC, or a microprocessor, in particular wherein, in the scope of the detection, the returning light signal (42) is progressively chronologically sampled and digitized in its entirety, in particular at a sampling rate of between 50 MS/s and 20 GS/s (i.e., megasamples or gigasamples per second), especially of between 200 MS/s and 2 GS/s.

11. Distance measurement method according to any one of the preceding claims, wherein
the light pulses (P(TOF)) and light signal trains (P(Φ)) have the same or - to the alternative - different carrier wavelengths.

12. Distance measurement method according to any one of the preceding claims, wherein
the light pulses (P(TOF)) and the light signal trains (P(Φ)) are emitted from the same light source or also from different light sources, in particular the light pulses (P(TOF)) are emitted from a laser source and the light signal trains (P(Φ)) are emitted from a superluminescent diode SLD.

13. Electro-optical distance meter (40) having
• at least one light source (1) for emitting at least one light signal (41), in particular laser light, onto a target object (5),
• a receiving circuit (50) having a detector (61) for detecting the light signal (42) backscattered from the target object and a signal processing electronics system connected downstream from the detector,
• an analysis component for determining a distance to the target object (5),
wherein
a controller is provided, which is configured and programmed such that Distance measurement method according to any one of Claims 1 to 12 is carried out thereby in operation.

14. Distance meter (40) according to Claim 13, wherein the receiving circuit (50) is provided with a sampling and digitization unit for signal sampling of the respective detected returning fractions of the light pulses (P(TOF)) and the light signal trains (P(Φ)) and generating digital data, which are then usable for further analysis.

15. Distance meter according to Claim 13 or 14, wherein two light sources are provided, one of which is a laser source for emitting the light pulses (P(TOF)) and a superluminescent diode SLD for emitting the light signal trains (P(Φ)), in particular wherein a light amplifier (41c), in particular an erbium-doped fiber amplifier EDFA, is arranged downstream from at least one of the two light sources, in particular the superluminescent diode SLD, in the optical beam path.

## Revendications

1. Procédé de mesure de distance électro-optique, comprenant au moins une
• émission d'un signal lumineux (41), en particulier de lumière laser, par au moins une source de lumière (1) sur un objet cible (5),
• détection d'une composante (42) du signal lumineux en retour de l'objet cible (5) au moyen d'un détecteur (47a, 47b, 51, 61) et d'une électronique de traitement de signal montée en aval du détecteur,
• détermination d'une distance par rapport à l'objet cible (5),
dans lequel le signal lumineux émis (41) comprend une séquence d'éléments de séquence de chaque fois
• au moins une impulsion lumineuse (P(TOF)) et
• un train de signaux lumineux (P(Φ)),
**caractérisé en ce que**
les impulsions lumineuses (P(TOF)) présentent chacune une amplitude d'intensité I plus élevée que les trains de signaux lumineux (P(Φ)), dans lequel
• les impulsions lumineuses (P(TOF)) sont chacune modulées de telle sorte que leurs composantes en retour de l'objet cible (5) sont prévues pour être évaluées selon la méthode du temps de propagation des impulsions TOF et
• les trains de signaux lumineux (P(Φ)) sont chacun modulés de telle sorte que leurs composantes en retour de l'objet cible (5) sont prévues pour être évaluées selon la méthode de la comparaison de phases Φ,
et que, à chaque fois, les composantes en retour détectées des impulsions lumineuses (P(TOF)) sont évaluées en ce qui concerne une position dans le temps et les composantes en retour détectées des trains de signaux lumineux (P(Φ)) sont évaluées en ce qui concerne une position de phase.

2. Procédé de mesure de distance selon l'une des revendications précédentes, dans lequel
• les impulsions lumineuses (P(TOF)) sont configurées en ce qui concerne leur amplitude d'intensité I de telle sorte que les composantes en retour d'un objet cible (5) - situé dans une plage de distance moyenne - sont prévues pour activer le détecteur dans sa plage d'amplitude supérieure lorsqu'elles sont détectées par le détecteur, et
• les trains de signaux lumineux (P(Φ)) sont configurés en ce qui concerne leur amplitude d'intensité I de telle sorte que les composantes en retour d'un objet cible (5) - situé dans une plage de distance moyenne - sont prévues pour activer le détecteur dans sa plage d'amplitude linéaire lorsqu'elles sont détectées par le détecteur.

3. Procédé de mesure de distance selon l'une des revendications précédentes, dans lequel
les trains de signaux lumineux (P(Φ)) comprennent chacun une séquence d'impulsions lumineuses de train de signaux lumineux relativement peu espacées dans le temps, en particulier émises de manière quasi continue, et ayant chacune une amplitude plus petite par rapport aux impulsions lumineuses (P(TOF)), en particulier dans lequel les impulsions lumineuses individuelles de train de signaux lumineux (P(Φ)) sont émises à une fréquence de répétition comprise entre 10 MHz et 100 GHz, en particulier à une fréquence de répétition comprise entre 50 MHz et 1000 MHz.

4. Procédé de mesure de distance selon la revendication 3,
dans lequel
les impulsions lumineuses de train de signaux lumineux sont chaque fois accumulées par train de signaux lumineux (P(Φ)) du côté récepteur ou du côté évaluation pour déterminer un temps de propagation moyen pour le train de signaux lumineux respectif (P(Φ)).

5. Procédé de mesure de distance selon la revendication 3 ou 4,
dans lequel
les trains de signaux lumineux (P(Φ)) comprennent chacun une séquence de deux à cinquante impulsions lumineuses de train de signaux lumineux.

6. Procédé de mesure de distance selon la revendication 5,
dans lequel
la séquence comprend deux impulsions lumineuses de train de signaux lumineux d'amplitude différente.

7. Procédé de mesure de distance selon l'une des revendications 1 à 4,
dans lequel
les trains de signaux lumineux (P(Φ)) couvrent chacun une durée comprise entre 10 et 95 % de l'intervalle de temps entre deux impulsions lumineuses (P(TOF)) successives.

8. Procédé de mesure de distance selon l'une des revendications précédentes,
dans lequel
l'intervalle de temps (Δ(TOF)) entre deux impulsions lumineuses (P(TOF)) successives est compris entre 50 ns et 2000 ns.

9. Procédé de mesure de distance selon la revendication directement précédente,
dans lequel,
en fonction de la plage d'amplitude dans laquelle le détecteur est respectivement activé par les composantes en retour détectées des éléments de séquence,
• seule la composante en retour respectivement détectée de l'impulsion lumineuse (P(TOF)) en ce qui concerne une position dans le temps - pour ainsi dire selon le procédé de l'évaluation ponctuelle - est utilisée pour la détermination de distance ou
• seule la composante en retour respectivement détectée du train de signaux lumineux (P(Φ)) est utilisée pour la détermination de distance ou
• la composante en retour respectivement détectée de l'impulsion lumineuse (P(TOF)) et la composante en retour respectivement détectée du train de signaux lumineux (P(Φ)) sont utilisées conjointement pour la détermination de distance, en particulier dans lequel, à chaque fois, une information sur la position dans le temps déterminée de la composante en retour de l'impulsion lumineuse (P(TOF)) est prise en compte dans le cadre de l'évaluation de la composante en retour du train de signaux lumineux (P(Φ)) du même élément de séquence ;
en particulier dans lequel, en fonction de la plage d'amplitude dans laquelle le détecteur est respectivement activé par les composantes en retour détectées des éléments de séquence, toujours soit
• seule la composante en retour respectivement détectée de l'impulsion lumineuse (P(TOF)) en ce qui concerne une position dans le temps - pour ainsi dire selon le procédé de l'évaluation ponctuelle - est utilisée pour la détermination de distance, soit
• seule la composante en retour respectivement détectée du train de signaux lumineux (P(Φ)) est utilisée pour la détermination de distance.

10. Procédé de mesure de distance selon l'une des revendications précédentes,
dans lequel
les composantes en retour détectées des impulsions lumineuses (P(TOF)) et des trains de signaux lumineux (P(Φ)) sont chaque fois échantillonnées et numérisées par l'électronique de traitement de signal et des données numériques sont générées, lesquelles sont utilisées pour une évaluation ultérieure, en particulier par un FPGA, un SoC ou un microprocesseur,
en particulier dans lequel, dans le cadre de la détection, le signal lumineux en retour (42) est échantillonné et numérisé en continu dans son ensemble dans le temps, en particulier à une fréquence d'échantillonnage comprise entre 50 MS/s et 20 GS/s (c'est-à-dire méga- ou gigaéchantillons par seconde), en particulier comprise entre 200 MS/s et 2 GS/s.

11. Procédé de mesure de distance selon l'une des revendications précédentes,
dans lequel
les impulsions lumineuses (P(TOF)) et les trains de signaux lumineux (p(Φ)) ont des longueurs d'onde de porteuse identiques ou différentes.

12. Procédé de mesure de distance selon l'une des revendications précédentes,
dans lequel
les impulsions lumineuses (P(TOF)) et les trains de signaux lumineux (P(Φ)) sont émis par la même source de lumière ou bien par des sources de lumière différentes, en particulier les impulsions lumineuses (P(TOF)) sont émises par une source laser et les trains de signaux lumineux (P(Φ)) sont émis par une diode superluminescente SLD.

13. Appareil de mesure de distance électro-optique (40) comprenant :
• au moins une source de lumière (1) pour émettre au moins un signal lumineux (41), en particulier de la lumière laser, sur un objet cible (5),
• un circuit récepteur (50) comprenant un détecteur (61) pour détecter le signal lumineux (42) renvoyé par l'objet cible et une électronique de traitement de signal montée en aval du détecteur,
• un composant d'évaluation pour déterminer une distance par rapport à l'objet cible (5),
dans lequel un dispositif de commande est prévu, qui est configuré et programmé pour mettre en œuvre le procédé de mesure de distance selon l'une des revendications 1 à 12 pendant le fonctionnement.

14. Appareil de mesure de distance (40) selon la revendication 13,
dans lequel
le circuit récepteur (50) est pourvu d'une unité d'échantillonnage et de numérisation pour échantillonner les signaux des composantes en retour respectivement détectées des impulsions lumineuses (P(TOF)) et des trains de signaux lumineux (P(Φ)) et pour générer des données numériques qui peuvent ensuite être utilisées pour une évaluation ultérieure.

15. Appareil de mesure de distance selon la revendication 13 ou 14,
dans lequel
deux sources de lumière sont présentes, dont une source laser pour l'émission des impulsions lumineuses (P(TOF)) et une diode superluminescente SLD pour l'émission des trains de signaux lumineux (P(Φ)), en particulier dans lequel un amplificateur de lumière (41c), en particulier un amplificateur à fibre dopée à l'erbium EDFA, est disposé en aval d'au moins une des deux sources de lumière, en particulier de la diode superluminescente SLD, dans le trajet optique de la lumière.
